(19) 

Europäisches
Patentamt
European
Patent Office
Office européen
des brevets

(11) **EP 3 422 208 A1**

(12) **EUROPEAN PATENT APPLICATION**

(43) Date of publication:
**02.01.2019 Bulletin 2019/01**

(51) Int Cl.:
***G06F 17/30*** *(2006.01)*

(21) Application number: **17305840.5**

(22) Date of filing: **30.06.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Thomson Licensing
92130 Issy-les-Moulineaux (FR)**

(72) Inventors:
• **CHEVALLIER, Louis**
  **35576 Cesson-Sévigné (FR)**
• **PEREZ, Patrick**
  **35576 Cesson-Sévigné (FR)**
• **ENGILBERGE, Martin**
  **35576 Cesson-Sévigné (FR)**

(74) Representative: **Vidon Brevets & Stratégie
16B, rue de Jouanet
BP 90333
35703 Rennes Cedex 7 (FR)**

(54) **METHOD FOR ITEM RETRIEVAL, ELECTRONIC DEVICE, COMPUTER PROGRAM PRODUCT AND CORRESPONDING STORAGE MEDIUM**

(57) The present disclosure relates to a method comprising outputting a first piece of information associated to a first point of a space comprising points associated to items of a collection of items, the first piece of information being selected by taking into account a position of the first point in the space and a position of a reference point of the space.

Figure 1

**Description**

**1. Field of the present disclosure**

The field of the present disclosure relates to retrieving at least one item from a collection of items, such as for example a textual item or media content, like still images, audio and/or video frames, and/or videos, from an electronic device. The collection can be of items of the same type (for example only still images, or only videos, or only audio content, text files, etc.) or of items of different types (for example a combination of images, videos, audio content, text files).
A method for item retrieval, and corresponding electronic device, computer program product and storage medium are described.

**2. Prior art**

Currently it is easy for a user to generate and/or store multiple items of media content.
The multitude of content available to a user is such that a user often cannot access all the content available to him at once. As a result, it may be helpful for a user to have access to a content retrieval tool when he wishes to search for a specific content.
To meet this need, various content retrieval techniques have become available. For example, in the field of visual search, some existing techniques are based on a comparative analysis of images amongst themselves. A query image, provided by a user, is used as a guide for the retrieval of images belonging to a collection of images. The low-level characteristics (such as a texture, a colour, a shape, etc.) of the reference image is used to predict the image(s) a user wants to retrieve. However, the success of such retrieval techniques is linked to the relevance of the query image used for image retrieval and of the visual similarity to assess answer quality. It can be difficult for a user, and/or time consuming, to find such a relevant query image.
It is of interest to propose techniques that permit enhancing the user experience of an electronic device, upon item retrieval, compared to some prior art solutions.

**3. Summary**

The present principles enable at least some disadvantages to be resolved by proposing a method comprising outputting at least one first piece of information associated to a first point of a space comprising points associated to items of a collection of items, said first piece of information being selected by taking into account a position of said first point in said space and a position of a reference point of said space. The items can notably be of textual type, of audio type or of visual type. It is to be understood that a visual item may include at least one image, picture, photo, drawing, frame or group of pixels from a video or a movie. It can also be a collection of stills. A visual item may also include other data, for instance audio and/or metadata. In the present disclosure, an output of information may notably comprise a provision of the information on an output interface (for example a display (graphic or textual) of the information on a screen coupled to an electronic device, or a sound rendering of the information via voice synthesis through speakers or a jack coupled to the electronic device), or a sending of the information via a communication interface of the device to a remote device.
The space can be a multimodal representation space (also called herein multimodal space), comprising points associated to piece of information of different types (for instance of image type and of textual type).
According to an embodiment of the present disclosure, at least one of said first piece of information is an item of said collection of items.
According to an embodiment of the present disclosure, the first piece of information can be a piece of information, represented by a point in the space, but external to the collection of items.
According to an embodiment of the present disclosure, at least one of said first piece of information is a textual element, like a word or a textual sequence.
The first piece of information can for instance be rendered, in a user interface coupled to an electronic device where the method is implemented
According to an embodiment of the present disclosure, said method comprises updating a position of said reference point in said space.
According to an embodiment of the present disclosure, said updating takes into account a first relevance indicator related to said output first piece of information.
According to an embodiment of the present disclosure, said first piece of information is selected among pieces of information associated with a point of said space by taking into account a distance between positions of points associated with said pieces of information inside said space and said position of said reference point.
According to an embodiment of the present disclosure, said first piece of information is an item of said collection of items and said piece of information is selected among items associated with a point of said space. Said selecting can notably take into account a distance between positions of points associated with said items inside said space and said position of said reference point.

According to an embodiment of the present disclosure, said first piece of information is external to said collection of items and said piece of information is selected among piece of information external to said collection of items associated with a point of said space. Said selecting can notably take into account a distance between positions of points associated with said pieces of information inside said space and said position of said reference point.

According to an embodiment of the present disclosure, said updating is performed between two iterations of said outputting of a first piece of information.

According to an embodiment of the present disclosure, said updating takes into account a first relevance indicator related to said output first piece of information.

According to an embodiment of the present disclosure, said first relevance indicator is representative of a relevance of said first piece of information regarding a second item of said collection of items. This second item can be an item that a user is searching for, for instance.

According to an embodiment of the present disclosure, said first relevance indicator is obtained from a user interface.

According to an embodiment of the present disclosure, said first relevance indicator is a Boolean and/or an integer comprised in a finite range of values.

According to an embodiment of the present disclosure, said updating takes into account a position of a second point of said space.

According to an embodiment of the present disclosure, said second point is a point of said multimedia space associated to a second piece of information obtained from a user interface.

According to an embodiment of the present disclosure, said second piece of information belongs to a group comprising:

- a free text,
- an image belonging to said collection of items,
- an image outside said collection of items,
- a portion of said first item, said first item being of image type.

According to an embodiment of the present disclosure, said method comprises outputting an information relative to said reference point together with said first and/or second piece of information.

According to an embodiment of the present disclosure, said first and/or second piece of information is of image type and said information relative to said reference point is a colour map that is representative of a localisation of said reference point inside said first and/second piece of information. According to another aspect, the present disclosure relates to an electronic device comprising at least one processor.

According to an embodiment of the present disclosure, said at least one processor is configured for outputting at least one first piece of information associated to a first point of a space comprising points associated to items of a collection of items, said first piece of information being selected by taking into account a position of said first point in said space and a position of a reference point of said space.

According to an embodiment of the present disclosure, said at least one processor is configured for updating a position of said reference point in said space.

According to an embodiment of the present disclosure, said updating takes into account a first relevance indicator related to said output first piece of information.

According to an embodiment of the present disclosure, said first relevance indicator is respectively representative of a relevance of said first item and/or said first piece of information regarding a second item of said collection of items.

According to an embodiment of the present disclosure, said at least one processor is adapted for obtaining said first relevance indicator from said user interface.

According to an embodiment of the present disclosure, said first relevance indicator is a Boolean and/or an integer comprised in a finite range of values.

According to an embodiment of the present disclosure, said updating takes into account a position of a second point of said space.

According to an embodiment of the present disclosure, said second point is a point of said space associated to a second piece of information obtained from a user interface. According to an embodiment of the present disclosure, said second piece of information belongs to a group comprising:

- a free text,
- an image belonging to said collection of items,

- an image outside said collection of items,
- a portion of said first item, said first item being of image type.

According to an embodiment of the present disclosure, said at least one processor is configured for outputting an information relative to said reference point together with said first item and/or said first and/or said second piece of information.

According to an embodiment of the present disclosure, said first and /or said second piece of information is of image type and information relative to said reference point is a colour map that representative of a localisation of said reference point inside said first and /or second piece of information.

While not explicitly described, the communication device of the present disclosure can be adapted to perform the method of the present disclosure in any of its embodiments

According to another aspect, the present disclosure relates to an electronic device comprising at least one memory and at least one processing circuitry.

According to an embodiment of the present disclosure, said at least one processing circuitry is adapted for outputting at least one first piece of information associated to a first point of a space comprising points associated to items of a collection of items, said first piece of information being selected by taking into account a position of said first point in said space and a position of a reference point of said space.

According to an embodiment of the present disclosure, said at least one processing circuitry is configured for updating a position of said reference point in said space.

According to an embodiment of the present disclosure, said updating takes into account a first relevance indicator related to said output first piece of information.

According to an embodiment of the present disclosure, said first and/or second relevance indicator is respectively representative of a relevance of said first piece of information regarding a second item of said collection of items.

According to an embodiment of the present disclosure, said at least one processing circuitry is adapted for obtaining said first relevance indicator from said user interface.

According to an embodiment of the present disclosure, said first relevance indicator is a Boolean and/or an integer comprised in a finite range of values.

According to an embodiment of the present disclosure, said updating takes into account a position of a second point of said space.

According to an embodiment of the present disclosure, said second point is a point of said space associated to a second piece of information obtained from a user interface.

According to an embodiment of the present disclosure, said second piece of information belongs to a group comprising:

- a free text,
- an image belonging to said collection of items,
- an image outside said collection of items,
- a portion of said first item, said first item being of image type.

According to an embodiment of the present disclosure, said at least one processing circuitry is configured for outputting an information relative to said reference point together with said first and/or said second piece of information.

According to an embodiment of the present disclosure, said first and/or said second piece of information is of image type and said information relative to said reference point is a colour map that representative of a localisation of said reference point inside said first and/or second piece of information. While not explicitly described, the electronic device of the present disclosure can be adapted to perform the method of the present disclosure in any of its embodiments.

According to another aspect, the present disclosure relates to a communication system comprising an electronic device of the present disclosure in any of its embodiments.

According to another aspect, the present disclosure relates to an electronic assembly comprising:

- a first electronic device comprising at least one processor;
- at least one second electronic device adapted to be coupled to said first electronic device.

According to an embodiment of the present disclosure, said at least one processor of said first electronic device is configured for outputting at least one first item of a collection of items, said first item being associated to a first point of a space comprising points associated to items of said collection of items, said first item being selected by taking into account a position of said first point in said space and a position of a reference point of said space. The second device can be for instance a display, an acquiring device or a communication device coupled to the first device. Herein, the term 'coupled' is defined to mean directly connected to or indirectly connected with through one or more intermediate components. Such intermediate components may include both hardware and software based components.

While not explicitly described, the electronic assembly of the present disclosure can comprise a first electronic device adapted to perform the method of the present disclosure in any of its embodiments.

While not explicitly described, the present embodiments related to a method or to the corresponding electronic device, electronic assembly or system can be employed in any combination or sub-combination.

For example, some embodiments of the methods of the present disclosure can involve a method, to be performed in an electronic device, comprising

- outputting at least one first piece of information being a first item of a collection of items on a user interface of the electronic device, said first item being associated to a first point of a multimodal representation space comprising points associated to items of said collection of items, said first item being selecting by taking into account a position of said first point in said multimodal space and a position of a reference point of said multimodal space;
- outputting at least one second piece of information of textual type associated to a second point of said multimodal space on said user interface, said second piece of information being selected by taking into account a position of said second point in said multimodal space and a position of said reference point of said multimodal space; updating a position of said reference point in said multimodal space, said updating being performed between two iterations of said outputting of a first piece of information and of a second piece of information.

According to another aspect, the present disclosure relates to a non-transitory program storage product, readable by a computer.

According to an embodiment of the present disclosure, said non-transitory computer readable program storage product tangibly embodies a program of instructions executable by a computer to perform at least one of the methods of the present disclosure in any of its embodiments.

According to an embodiment of the present disclosure, said non-transitory computer readable program product tangibly embodies a program of instructions executable by a computer for performing, when said non-transitory software program is executed by a computer, a method comprising outputting at least one first item of a collection of items, said first item being associated to a first point of a multimodal space comprising points associated to items of said collection of items, said first item being selected by taking into account a position of said first point in said multimodal space and a position of a reference point of said multimodal space.

According to another aspect, the present disclosure relates to a computer readable storage medium carrying a computer program comprising program code instructions for performing a least one of the methods of the present disclosure, in any of its embodiments, when said non-transitory software program is executed by a computer.

According to an embodiment of the present disclosure, said computer readable storage medium tangibly embodies a program of instructions executable by a computer for performing, when said non-transitory software program is executed by a computer, a method comprising outputting at least one first item of a collection of items, said first item being associated to a first point of a multimodal space comprising points associated to items of said collection of items, said first item being selected by taking into account a position of said first point in said multimodal space and a position of a reference point of said multimodal space. Such a computer-readable storage medium can take the form of a computer program product loaded onto at least one computer-readable storage medium comprising computer-readable and computer-executable program code instructions.

Thus, in the present patent application, a computer-readable storage medium is considered as being a non-transitory storage medium having the intrinsic capacity to store information and the intrinsic capacity to enable an output of the items of information which it stores.

Other embodiments, easily conceivable by those skilled in the art on reading the present description, are also included within the scope of the present disclosure.

In particular, the present disclosure is not limited to one implementation for a particular type of item and can relate to items belonging to heterogeneous collections of items. Furthermore, such items can be content stored on the same item of equipment, local or remote, or on various items of equipment.

## 4. List of figures.

The present disclosure can be better understood, and other specific features and advantages can emerge upon reading the following description, the description making reference to the annexed drawings wherein:

- Figure 1 illustrates an exemplary embodiment of the method of present disclosure;
- Figures 2A to 2C illustrate a definition of the embedding functions used according to at least some embodiments of the present disclosure;
- Figure 2D illustrates an embedding space constructed by applying the embedding functions illustrated by figures 2A to 2C;
- Figure 3 illustrates an exemplary electronic device according to at least one embodiment of the present disclosure;
- Figures 4, 5 and 7 illustrate exemplary user interfaces adapted to be used for interacting with a user according to at least embodiment of one of the method of present disclosure;
- Figure 6 illustrates the generation of a colour map locating, in a given image belonging to the collection of items, a reference point of the embedding space.

It is to be noted that the drawings have only an illustration purpose and that the embodiments of the present disclosure are not limited to the illustrated embodiments.

## 5. Description of embodiments.

In at least one embodiment, the present disclosure proposes a method that can assist a user for retrieving at least one item amongst a collection of items. As explained above, the item to be retrieved is an item that the user more or less reminds of.

As it will be later described with more details, at least one embodiment of the present disclosure uses a geometrical space, in association with items of the collection, as a tool for ranking the items of the collection according to the information provided by a user.

In a geometrical perspective, the geometrical space can be seen as the output of at least one mathematical function (or mapping), applied to a mathematical domain.

In the present disclosure, the geometrical space is the output (also called "embedding space") of at least one mathematical function (or mapping), also called "embedding function", applied to pieces of information (the domain) including items of a collection of items. The item the user is searching for is expected by the user to belong to this collection of items.

Optionally, the at least one embedding function can be constrained in order to provide consistent distances, with regards to the domain, inside this embedding space.

An object (respectively a piece of information or an item) on which the embedding function is applied is called hereinafter "embedded object" (respectively "embedded piece of information" or "embedded item").

Examples of embedded objects are items of the collection of items words issued from the captions of annotated items used for constructing the embedding space.

A projection is an example of embedding function.

With the above examples, an example of embedding space is a vector space.

At least some embodiments of the present disclosure can permit retrieving a known item from a collection of items by using a combination of images and words as inputs. For instance, the collection can be a medium sized collection of images (comprising for instance 1500 to 10000 elements).

At least some embodiments of the present disclosure can permit to propose to a user a way, for looking for an item, that does not require the input of a reference item (like a query image) provided by the user. Notably, in at least some embodiments of the present disclosure, the information provided by the user can be limited to relevance indicators related to output items, that have been automatically selected by an application (like a software application) comprising program instructions for implementing the method of the present disclosure when executed.

The item can be notably media content, such as a still image and/or a video, or a textual file. A still image can be a thumbnail of another content, like an audio and/or video content, and can also comprise data, like metadata, giving access to the other content. Depending upon embodiments, the collection can consist of items of the same type (for example only still images, or only videos, or only audio content, text files, etc.) or can comprise items of different types (for example a combination of images, videos, audio content, text files).

The collection of items can be diverse, comprising items related to many different topics, or scenes, as in the case for instance for a collection of pictures stored on a smartphone or a tablet used for a private purpose. For instance, the same collection can comprise pictures of many different landscapes (like mountain and seaside), pictures focused on animals, humans or animals, outdoor and indoor pictures, etc.

The collection can be stored on at least one electronic device. Depending upon embodiments, it can be stored on a unique device (like a terminal of the user or a remote server) or distributed on several devices. The collection can comprise items generated by the user of the electronic device himself (for example with a camera, a video camera or a smartphone) or received from various sources (particularly via the Internet or via a messaging system or via a removable support) and stored on the at least one device.

In some embodiments, the method can be used for instance in order to help a user to retrieve an item (also called hereinafter "target", "wanted" or "searched" item) that belongs to the collection of items and that the user roughly remembers. For instance, the target item can be an image that has been shot in the past by the user or received by the user and added to his personal collection of images on at least one storage device. As an example, the user may remember some elements of the image (like a specific object or specific character in the image), some particular colours and/or the overall structure of the image while encountering difficulties to find the item by itself on his storage device.

The embedding functions used to define a mapping of items of the collection into the multimodal embedding space, can also be used for instance in order to generate a feedback on a user interface. In some embodiment, as described herein after, this feedback can take the form of a bi-dimensional or tri-dimensional "heat map" highlighting in some proposed pictures (like 2D or 3D pictures) the interpretation of information (like indication of relevance) already received from a user.

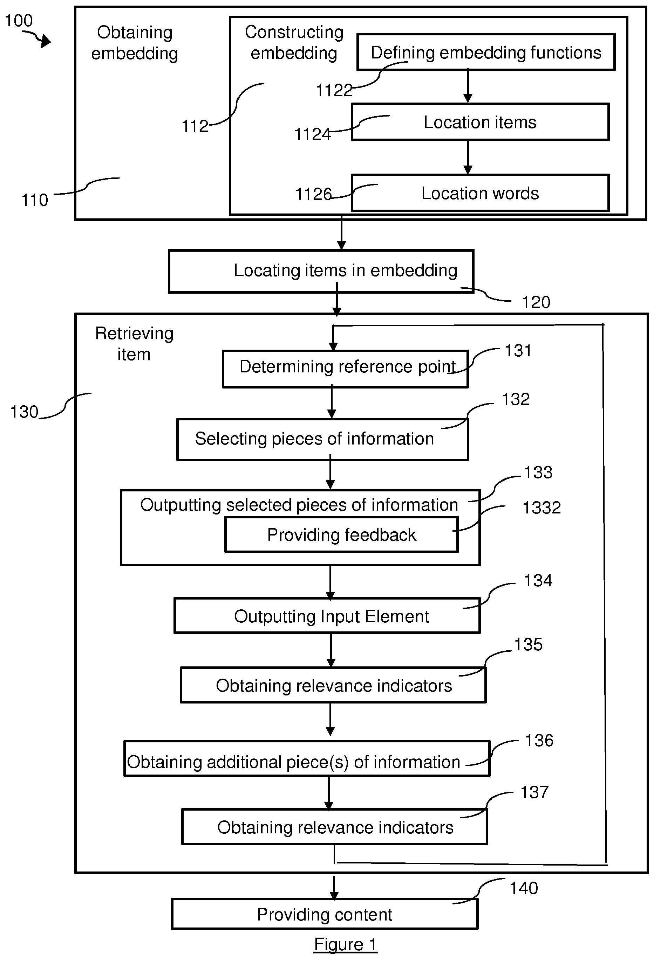

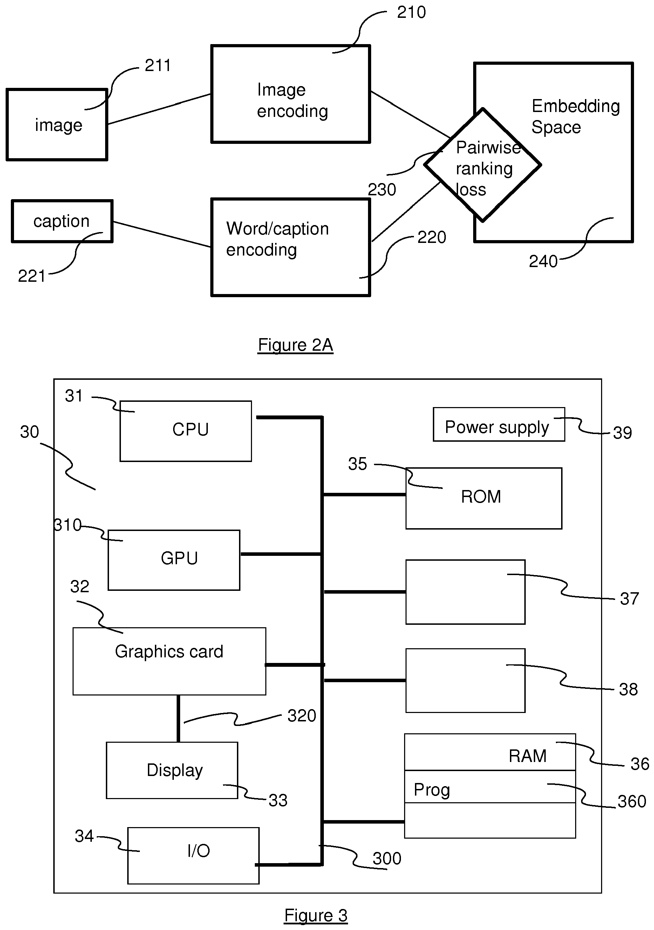

Figure 3 describes the structure of an exemplary electronic device 30 configured notably to perform any of the embodiments of the method of the present disclosure, for instance the embodiments described below in link with figure 1.

It is to be pointed out that the elements, or modules, or blocks, of the functional structure illustrated in figure 3 can be implemented using software components stored in memory and executed by a processor or CPU of the electronic device and/or using hardware components of the electronic device. At least some elements illustrated by figure 3 can comprise both at least one software component and at least one hardware component of the communication device.

The electronic device can be any image and/or video content acquiring device, like a smart phone or a camera. It can also be a device without any video acquiring capabilities but with image and/or video processing capabilities. For instance, in some embodiment, the electronic device can comprise a communication interface, like a receiving interface to receive a visual content (for instance a still image and/or a video sequence). This communication interface is optional. Indeed, in some embodiments, the electronic device can process contents, like contents stored in a medium readable by the electronic device, received or acquired by the electronic device.

In the exemplary embodiment of figure 3, the electronic device 30 can include different devices, linked together via a data and address bus 300, which can also carry a timer signal. For instance, it can include a micro-processor 31,310 (or CPU), notably a Graphic Processing Unit (GPU) 310 (Optional), a graphics card 32 (depending on embodiments, such a card may be optional), at least one Input/ Output module 34, (like a keyboard, a mouse, a led, and so on), a ROM (or "Read Only Memory") 35, a RAM (or "Random Access Memory") 36.

In the exemplary embodiment of figure 3, the electronic device can also comprise a power supply 39, at least one communication interface 37 configured for the reception and/or transmission of data, notably image and/or video data, via a wireless coupling (notably of type WIFI® or Bluetooth®), at least one wired communication interface 38. Those communication interfaces are optional.

In some embodiments, the electronic device 30 can also include, or be coupled to, at least one display module 33, for instance a screen, directly coupled to the graphics card 32 by a dedicated bus 320. Such a display module can be used for instance in order to output (either graphically, or textually) information, as described hereinafter in link with the method of the present disclosure.

It is to be noted that in some embodiments, the electronic device can include several display modules.

In the illustrated embodiment, the electronic device 30 can communicate with another device (like a server or camera) or with one of the display(s) thanks to a wireless interface 37.

Each of the mentioned memories can include at least one register, that is to say a memory zone of low capacity (a few binary data) or high capacity (with a capability of storage of an entire audio and/or video file notably).

When the electronic device 30 is powered on, the microprocessor 31 loads the program instructions 360 in a register of the RAM 36, notably the program instruction needed for performing at least one embodiment of the method described herein, and executes the program instructions.

According to a variant, the electronic device 30 includes several microprocessors.

According to another variant, the power supply 39 is external to the electronic device 30.

In the exemplary embodiment illustrated in figure 3, the microprocessor 31 can be configured for outputting at least one first piece of information associated to a first point of a space comprising points associated to items of a collection of items, the first piece of information being selected by taking into account a position of the first point in said space and a position of a reference point of the space.

Figure 1 illustrates a flowchart of an exemplary method 100 according to the present disclosure. The method can be implemented for instance in the electronic device 30 of figure 3.

In the embodiment described in relation to figure 1, the method of the present disclosure is used for retrieving at least one image belonging to a collection of items, for example a collection of images, stored on a storage space, for example a database, of the terminal 30. For example, the database may contain files in "JPG", "GIF", or any other image format.

In some embodiments, the storage space containing the collection of items may be located, locally, in the terminal in which the method of the present disclosure is implemented. In other embodiments, the collection of items may be stored on at least one remote server, notably a Web server, and be accessible for example in a transparent manner, by cloud computing technologies, or through dedicated platforms such as Flickr®, Google images®, etc. In such embodiments, some parts of the method (such as constructing the embedding) may be implemented by the remote server, while others (such as outputting an image as shown in figure 1) may be implemented on a client terminal.

In the embodiment described, the user of the method may be for example a user in a home environment that wants to retrieve a particular picture of his personal digital photo album.

In the exemplary embodiment illustrated, prior to a search (or retrieving) of an item, the method 100 can comprise (during an initialisation step for instance) obtaining 110 an embedding space. Depending upon embodiments, the obtaining 110 can comprise accessing a storage medium, either located remotely or locally to the terminal 30, storing the embedding space and/or the embedding functions that permit to construct the embedding space. Notably, the embedding space may have been formed (or constructed) previously. In the exemplary embodiment illustrated, the obtaining 110 comprise constructing 112 an embedding space. The construction of an embedding space is illustrated by figures 2A to 2D.

The constructing 112 of an embedding space can comprise defining 1122 embedding functions that will be applied to objects (notably items of the collection) for locating points representing those embedded objects in the embedding space.

More precisely, In the illustrated embodiment, defining 1122 of embedding functions comprising training some embedding functions on a large domain of training objects (notably training objects not part of the collection of items), like annotated images belonging to a large training data set training objects. It is to be pointed out that several captions (or annotations) can be associated with a given training image.

Depending upon embodiments, the embedding functions used can vary.

In some embodiment, the embedding functions used can comprise at least two feature extractors. Notably, at least one of the feature extractors can be used for captions and at least one of the feature extractors can be used for images. In the exemplary embodiment illustrated by figure 2A, the embedding functions comprise two different feature extractors 210, 220: one feature extractor 210, used for encoding images 211 and one feature extractor 220, used for encoding words based on captions 221.

In the illustrated embodiment, where the embedding functions are first trained on annotated objects, the at least one feature extractor 220 for caption and the at least one feature extractor 210 for image can be conjointly trained to enforce similarity between images 211 and related captions 221 in the embedding space 240.

Some of the embedding functions used for constructing the embedding space can for instance have an architecture at least partially similar to the one proposed by Kiros and al. in the document "Unifying Visual-Semantic Embedding with Multimodal Neural Language Models" (Journal "ArXiv"- 2014). However, many differences may exist with this latter architecture.

Notably, instead of using a standard Convolutional Neural Network (CNN) for image features extractor such as a CNN known as "AlexNet" or a CNN known as "ResNet" or a CNN provided by the Visual Geometry Group (VGG), some of the embedding functions can be implemented by using a CNN able to produce localization of objects through weakly supervised learning.

In some embodiments, some of the embedding functions can also be implemented by using a neural language model, like a multimodal neural language model, as described for instance in the document "Unifying Visual-Semantic Embedding with Multimodal Neural Language Models" of Kiros and al. (Journal "ArXiv"- 2014).

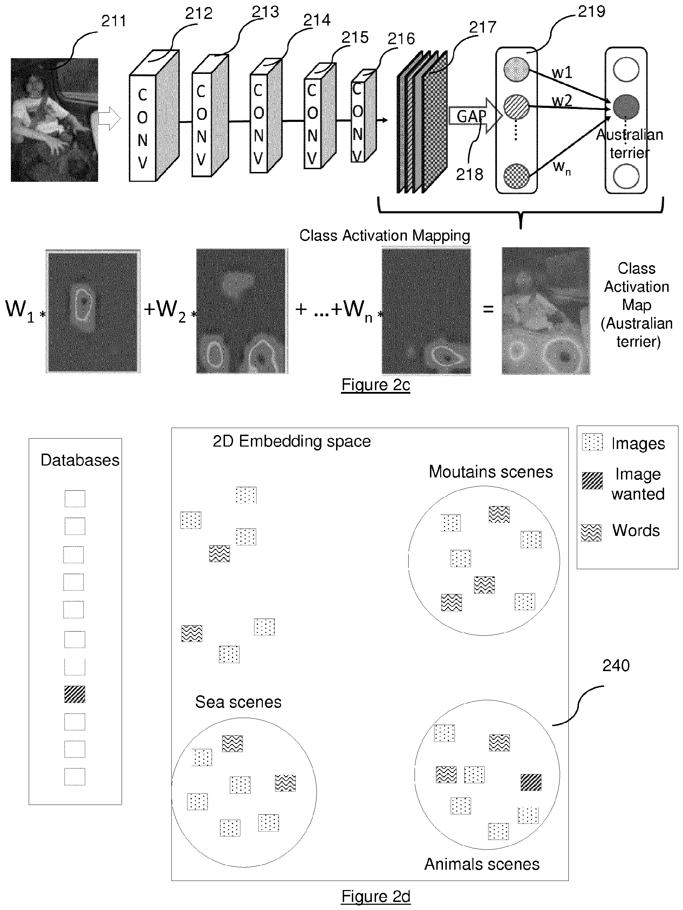

Furthermore, as illustrated by figure 2C for instance, one of the embedding functions can be implemented by using Class Activation Mapping (CAM) as disclosed by Bolei Zhou and al. and global average pooling. More precisely, according to the embodiment of figures 2A and 2C, descriptors $U_i$ encoding the images 211 used for the training (or in other words the images of the multimodal training dataset) are computed using a convolutional neural network (CNN) 210. This Convolutional neural network can have been pretrained, prior to the computing, on a large semantically tagged dataset. The CNN can notably comprise at least one convolutional layer 212, 213, 214, 215, 216, 217 (that keeps localization information of features inside a training image), at least one pooling layer 218 that can notably be a Global Average Pooling (GAP) layer, and at least one fully connected layer 219 (that loses localization information of features inside a training image).

The result of the last convolutional layer is a stack F 217 of N distinct WxH-dimensional feature maps. This stack F of feature maps can be used, as explained later, in the purpose of providing a feedback to a user, for localization, in an embedded visual item, of a concept represented by a given point of the embedding space.

Depending upon embodiments, different techniques can be used for generating the stack 217 of feature maps. Examples of a network generating a stack F feature maps are for instance described by document "Learning Deep Features for Discriminative Localization" of Zhou and al - (Conference on Computer Vision and Pattern Recognition - 2016).

In the exemplary embodiment of figure 2c, after the convolutional layers, the CNN comprises a GAP layer 218 being the second to last layer of the CNN 210 and at least one fully connected layer 219. The fully connected layer 219 can notably be used to generate feature descriptors of embedded images.

The GAP layer outputs a vector having N components (N being the number of feature maps). Each of the N feature maps is represented in this vector by a component being the average of the "each" N feature map.

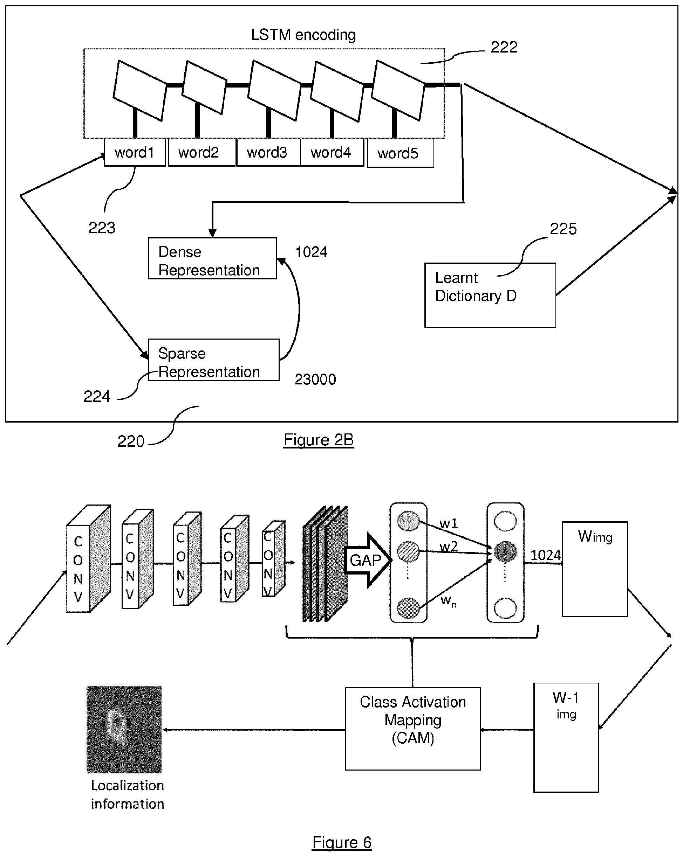

According to the embodiment of figures 2A and 2B, in parallel of sequentially to the obtaining of descriptors of the image encoding function, descriptors $V_i$ encoding the captions of the images of the training set can also be computed by using for instance a recurrent neural network (RNN) 222. Such a RNN can have prior be trained on words of a big textual corpus using a Long Short-Term Memory(LSTM) RNN as illustrated by figure 2B.

In the exemplary embodiment of figure 2A, a joint training of both image and caption feature extractors is then performed for learning a visual embedding matrix $W_{img}$ (for images) and coefficients of the LSTM (for caption), that permits to construct an embedding space common to the annotated images and their captions (and thus for words included in such captions). This visual embedding matrix can be determined with respect to the following pairwise ranking loss 230:

$$\min_{\theta} \sum_{x} \sum_{k} \max\left\{0, \alpha - s(x,v) + s(x,v_k)\right\} + \sum_{v} \sum_{k} \max\left\{0, \alpha - s(v,x) + s(v,x_k)\right\}$$

Where:

- $x$ is a vector representation of an image in the embedded space
- $v$ is a vector representation of the corresponding caption in the embedded space
- $x_k$ is contrastive element of image type, randomly selected, of v;
- $v_k$ is contrastive element of caption, randomly selected, of x;
- if a,b are two vectors of the embedding space, *s(a,b)* is the cosine similarity between those two vectors. It represents a ratio between the dot product of the vectors a,b and the magnitude of the vectors.
- $\alpha$ is a margin parameter
- $\Theta$ are parameters of the embedding matrix $W_{img}$ or coefficients of the LSTM.

The value of the parameters $\Theta$ of the visual embedding matrix $W_{img}$ and of the LSTM are learned by minimizing the above following loss function.

As illustrated by figure 2B, the method can also comprise deriving an embedding for individual words from the embedding functions used for captions. For instance, in the embodiment of figure 2B, a "least squares" technic can be used in order to find an optimal dictionary D 225, which contains representation in the embedding space of words included in at least one caption of the annotated images. The optimal, or learned, dictionary *D* 225 can be defined thanks to the following formula:

$$\min_D |V - SD|^2$$

$$D = (S^T S)^{-1} S^T V$$

Where:

- *V* is a dense matrix 223 (comprising for instance one caption embedding vector per line)
- *S* sparse matrix 224 (comprising for instance one sparse binary word-based caption encoding per line)
- *D* is the dictionary 225 to be learned.

In other words:

V represents the embedded captions of all annotated images;
S also represents the same captions. However, S is a matrix of binary values, of dimension S1xS2 , where S1 is the total number of captions (of all annotated images) and S2 is the total number of words included in at least one caption, where one of the binary value (for instance the positive value) identifies an occurrence of a given word (included in at least one caption) in a given caption, and the other one of the binary value identifies an absence of the given word of the given caption.

The words present in the dictionary D constitute a vocabulary.

It is to be noted that, in some embodiments, the defining 1122 of the embedding functions and/or the constructing 112 of the embedding space can be performed previously to the obtaining of the embedding space (and its embedding functions) The defining and/or the constructing can notably be performed on a device different from the device implementing the method 100 of the present disclosure). Such an embodiment can permit an implementation of the method of the present disclosure in a device (like a mobile device, for instance a smart phone or a tablet) not having sufficient processing capabilities for processing a huge number of annotated images for defining 1122 the embedding functions and/or constructing the embedding space. For instance, in such an embodiment, the obtaining 110 can involve accessing (via a communication interface of the electronic device 30 of figure 3 for instance) an already constructed (or defined) embedding space and/or already defined embedding functions stored on a remote server. Once the embedding functions have been defined, the method 100 can comprise locating 1224, in the embedding space, at least one item of a collection of items, like a digital multimedia album stored on the electronic device 30 of figure 3.

More precisely, the locating can comprise finding the point of the embedding space that corresponds to an item thanks to the trained embedding functions.

Notably, a position $X_i$ in the embedding space of an image can be given by the descriptor $U_i$ produced by the CNN and encoding the image, by the formula:

$$X_i = W_{img}U_i \; ;$$

where $W_{img}$ is the embedding matrix.

In the embodiment illustrated, the collection of items can also comprise at least one textual item, like a word, notably a word present in the dictionary D learned during the training phase.

A position, in the same embedding space as the one for an embedded image of the collection of items, of a word of the vocabulary (of the training phase) can be given by the associated column of dictionary matrix D introduced above in link with the defining 1122 of the embedding functions,

The locating 1124 can also comprise storing, in association with a position of an item in the embedding space, information giving access to the corresponding item (like a link to a logical or physical storage location of the item, a file name, a version, a format, ...).

The locating 1124 of an item is optional during the constructing of the embedding space. Indeed, as illustrated by figure 1, In some embodiments, the locating 120 of an item can be performed, after le constructing 112 of the embedding space. For instance, locating an item in the embedding space can be performed on the fly, upon an insertion of the item into the collection of items (for instance before and/or after the insertion or in parallel to the insertion). In other embodiments, the locating 120 can be performed after the insertion of the item in the collection. For instance, a locating can be performed periodically, or on demand of a user, or, just before the retrieving step of the method, on a batch of at least one item that have been previously inserted in the collection (for instance a batch comprising all newly inserted items). The inserting of an item can be performed upon the acquiring of the item, either locally (for instance by some image and/or video acquiring means, like a camera or a web cam, of the electronic device illustrated by figure 3), or from a remote device, via a communication interface of the electronic device 30.

In some embodiments, the locating can involve reading of a local storage medium, like a memory of the electronic device 30 in which the method is implemented or a removable storage unit (like a USB key, a compact disk, and so on) in order to access the item and applying the defined embedding functions to the item.

In some embodiments, the method can comprise locating 1126, in the same embedding space, at least some words of the dictionary D, even if not included in the collection of items. For instance, in the illustrated embodiment, all words of the dictionary can be added to the embedding space.

Such a locating is optional. Depending upon embodiments, it can be performed prior, in parallel, or after the location of items of the collection in the embedding space.

In some embodiments, the constructed embedding space permits to group related concepts together. For instance, a first zone of the embedding space can gather images and texts mainly related to "mountain", while a second zone of the embedding space can gather images and texts mainly related to "animals" and a third zone of the embedding space can gather images and texts mainly related to "sea" as illustrated by figure 2D.

In some embodiments, as in the exemplary embodiment of figure 1, the method can be used to assist a user, or a group of users, in a retrieval of a particular item of the collection of items. In view of conciseness, assisting in retrieving an item is called herein after "retrieving" 130, even if this retrieving can of course be unsuccessful.

According to some embodiments, the retrieving 130 can be systematically performed (or at least proposed to a user) when accessing a collection of items (for example because the method is implemented, in a communication terminal, by an application executed as a background task on the terminal as soon as the terminal is switched on), or the retrieving can be performed upon a manual request made by a user of the terminal, for example by launching a specific application executed on the terminal.

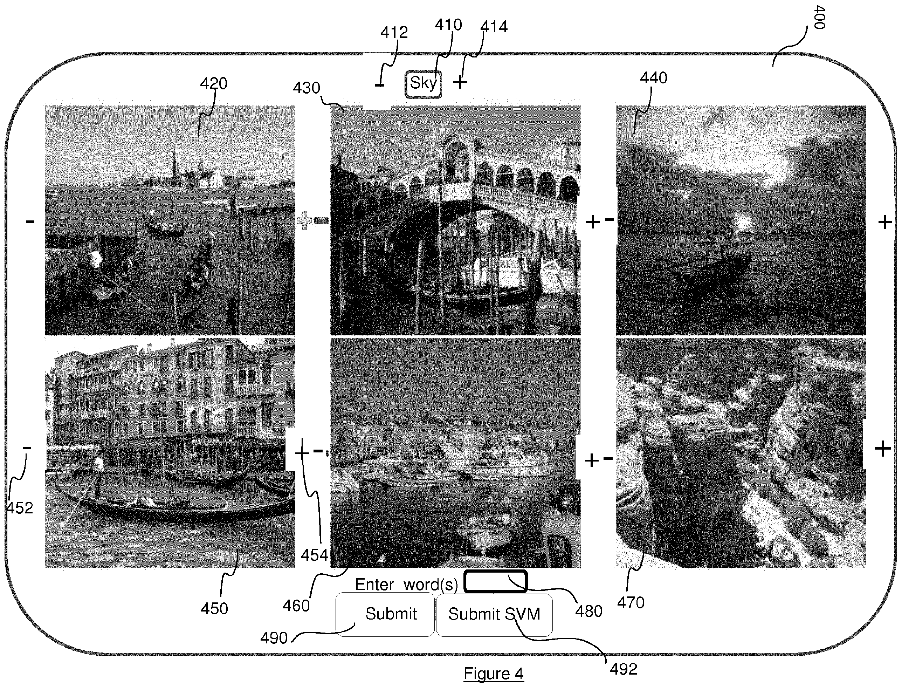

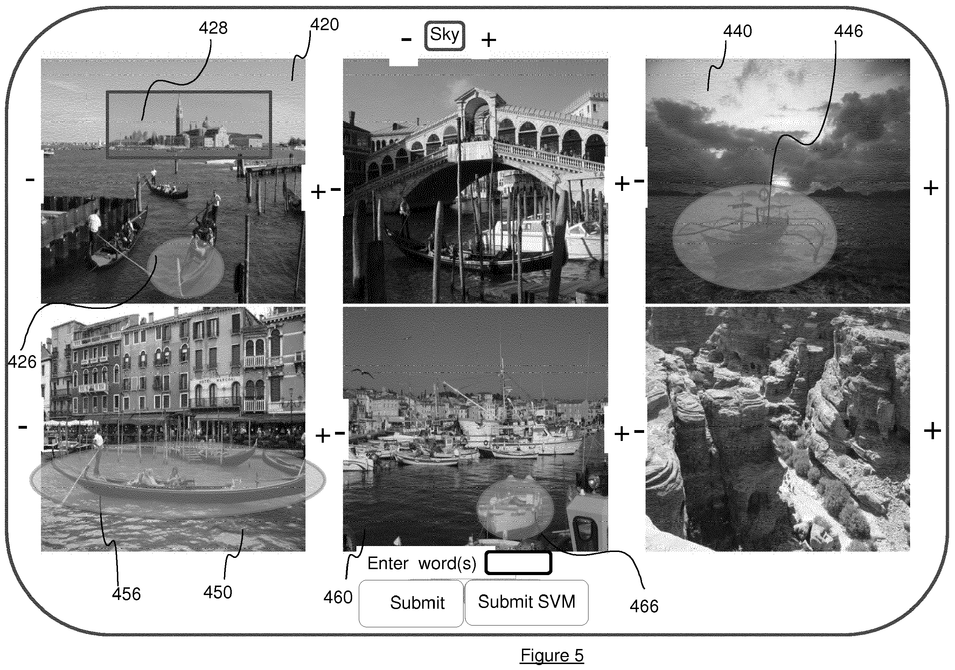

In the embodiment of figure 1, retrieving 130 an item is performed by interacting with a user, or group of users, via a user interface, like a touch screen of the electronic device illustrated by figure 3 for instance. The retrieving is presented below in link with figures 4 and 5 which illustrate an exemplary user interface of an application implementing the method of the present disclosure. Of course, in other embodiments, other ways of interacting with a user, for instance by asynchronous means, can be used.

In the embodiment illustrated, the method comprises selecting 132 at least one piece of information (for being output at a later stage notably) embedded in the embedding space. In the illustrated embodiment, an embedded piece of information can be for instance an item of the collection or a word of the vocabulary.

The selecting 132 can notably be performed according to the location of the embedded pieces of information in the embedding space. For instance, they can be chosen according to a distance between their location and a reference point of the embedding space.

In such an embodiment, the method can comprise, prior to the selecting 132, determining 131 a position of the reference point.

The reference point can be for instance a point located in the center of the embedding space, or a point being the origin of a referential used for locating the items in the embedding. For instance, with the reference point being represented as a vector in the embedding space, the reference point can be a vector having all its components equal to "0" in the referential of the embedding (or in other words the vector (0,...,0) of dimension n, with n being the dimension of the embedding space).

In the embodiment illustrated, a distance between a piece of information and a reference point can be assessed by measuring the cosine similarity between the vector of the reference point and the vector representing the location of the piece of information in the embedding space.

The selected pieces of information can be for instance the items of the collection having the closest locations compared to the reference point.

The pieces of information can be ranked using this distance, a first piece of information being closer to the reference point than a second piece of information being assumed to be more relevant than the second piece of information, regarding the user search.

In some embodiments, the closest pieces of information can be selected. Those selected pieces of information can thus comprise pieces of information of different types, like items of the collection or words of the vocabulary. Of course, the number of selected pieces of information can vary upon embodiments.

Furthermore, in some embodiments, a given number of pieces of information of a given type can be selected. Notably, the number of pieces of information to be selected can be different for pieces of information of different types. For instance, in the exemplary embodiments figures 4 and 5, the 6 closest images (the images being the closest to the reference point among the embedded images) are selected and only a single word (the word being the closest to the reference point among the embedded word) is selected.

Depending upon embodiments, a single ranking, ordering together all type of pieces of information can be implemented or, independent rankings can be implemented for each type of pieces of information.

The method can also comprise outputting 133 the selected pieces of information. In the illustrated embodiments of figures 4 and 5, the output pieces of information can comprise at least one image and the method comprises outputting 133 of at least one image 420, 430, 440, 450, 460, 470 on a touch screen of the terminal 30. The method can also comprise outputting (or rendering) of at least one textual piece of information 410, like a word or a group of words, of the defined vocabulary.

The method can also comprise outputting 134 input elements 412, 414, 452, 454, for at least one of the rendered (or output) pieces of information 410, 450, Those input elements are adapted for obtaining 135 a relevance indicator from the user interface regarding the piece of information 410, 450 they are associated to. For clarity purpose, all input elements illustrated by figures 4 and 5 have not been labelled by a numeral reference. Of course, in some embodiments, all the rendered pieces of information can be associated with input elements.

Depending upon embodiments, the input elements can be diverse. In the embodiment illustrated, the input elements associated with an output piece of information comprise a pair of activable buttons, like a "+" and a "- "buttons, that permit to obtain a positive or negative notation of the associated piece of information. For instance, a piece of information considered as being at least partially relevant to the target item, or in other words having at least some semantic similarity with the target item, can be expected to receive a positive notation. At the opposite, a piece of information considered as being not relevant to the target item, or in other words having little semantic similarity with the target item, can be expected to receive a negative notation. Of course, in other embodiments, the notation can have opposite values.

In some embodiments, the selection of one button of a pair of antagonist buttons can unselect automatically the other button of the same pair. In other embodiments, not illustrated, a third button (like a Button with a label like "ignore" or "not significant") can be associated to an output piece of information. In such a case, the output piece of information will not be taken into account in the further stages of processing.

In still other embodiments, not illustrated, the input elements can comprise a drop-down menu, adapted for acquiring a numeral value from a user, like an integer value from a determined range (for example [0; 10], [0; 20] or [0;

100]). The numeral value can be considered as a graduation of a relevance scale. Obviously, in other embodiments, values other than numeric values can be assigned to an input element (for example values belonging to a determined set of literal values, or values in the form of t-uples, combining more than one numeric and/or literal value).

In still other embodiments, a relevance input element can also comprise a cursor that moves along a gradation, where the position indicates the value of a relevance indicator. Naturally, the examples described above are not restrictive and, in still other embodiments, many different input elements (like dialog box, and so on...) can be used for obtaining a relevance indicator.

In the embodiment illustrated by figure 4 or 5, the same kind of input elements (like the activable buttons) is assigned to each piece of information. Of course, in other embodiments, different input elements can be used for several rendered pieces of information. For instance, a first piece of information can be rendered together with a pair of activable, antagonist, buttons, as illustrated, and a second piece of information can be rendered concurrently together with a dialog zone only permitting the input of some particular textual elements (like "Yes"/" No" or "OK"/" KO").

In some embodiments, an input element can be rendered differently depending on whether it is selected or not (for instance a selection of an activable button can modify its rendering colour, or the rendering of an antagonist button). Notably, the unselected antagonist button can be outputted in a degraded fashion (for example blurred or with lower contrast).

In the embodiment shown, all the pieces of information of image type are rendered with a same size. Of course, in other embodiments, different pieces of information can be outputted with different sizes (for pieces of information of image type notably), different polices (for pieces of information of textual type notably). For instance, the size or the presentation of an output piece of information can vary according to its ranking amongst selected pieces of information.

Also, the number of pieces of information that are outputted concurrently can vary upon embodiments.

In some embodiments, the method can also comprise obtaining 136 an additional piece of information and/or obtaining 137 a corresponding relevance indicator. For instance, as in the embodiment shown in figure 4 and/or 5, the input/output (IO) element(s) of the interface can comprise at least one input element, like a dialog box 480, that can permit to a user to enter a free text, that can be constituted of a single word and/or several words depending upon embodiments. It is to be pointed out that, in some embodiments, the input element can notably permit to acquire a link to a piece of information (for instance a link to a visual piece of information like a still image). In some embodiments, obtaining a relevance indicator regarding the additional piece of information (like the free text or the piece of information accessible for the acquired link) can be performed implicitly, without any explicit assessing by a user. For instance, in the embodiment illustrated in figures 4 and 5, no input element (like an activable button) permitting to acquire a relevance indicator is provided together with the free text dialog box. In such an embodiment, it can be assumed, as the text is freely chosen by the user, that a positive relevance indicator is implicitly inputted with the free text when the free text is submitted. In other words, in such an embodiment, it can be assumed that a user has submit at least one word or a link to piece of information (like a visual piece of information) that describes the item he is looking for. Of course, in other embodiments, it can be assumed that a negative relevance indicator is implicitly inputted with the free text. In other embodiments, an explicit relevance indicator can be explicitly required from the user.

In some embodiment, as illustrated by figure 5, the interface can permit a user to select a portion 428 of an image and to attribute, either explicitly or implicitly (as for free text) a relevance indicator to the portion of image. For instance, in an embodiment like the exemplary embodiment detailed, where the embedding model is based on a CAM network, a selected portion (or sub-region) of an image can be embedded by using the already computed encoding of the whole image. This can allow a locating, on the fly, of any region of an image on the embedding space. The user interface can also comprise at least one IO elements (like submit buttons 490, 492) that can be used by a user for validating the current value of all rendered input elements and/or the use of the current content of the dialog box.

In the embodiment described, the retrieving step 130 of the method is performed iteratively and the determining 131 of a position of the reference point used for ranking and selecting 132 the pieces of information can use the relevance indicators obtained in at least one previous iteration of the retrieving. Notably, the relevance indicators obtained from a user can have an impact on the embedding space, for instance by some arithmetic operations on the vector representing the location of the reference point. For instance, with relevance indicators being either positive or negative, the vector identifying a location in the embedding of a piece of information associated with a positive relevance indicator can be added to the vector of the reference point. As a consequence, the reference point is moved toward the position in the embedding space of the positively assessed item. On the contrary, if a piece of information is assessed with a negative relevance indicator, the vector identifying its location in the embedding can be subtracted from the vector of the reference point, therefore pulling the reference point away from the location in the embedding space of the negatively assessed item.

In an embodiment that permits to obtain a "null" (or neutral) relevance indicator (like an embodiment where the input elements associated to a piece of information comprise an "ignore" button) a null value can be added to the vector of the reference point (thus having a null impact of a position of the reference point). In a variant, a null weight (to be used for ranking) can be associated to the piece of information.

Similarly, in other embodiments where the relevance indicators of the output pieces of information can be assigned a value of a numeric range, the reference indicators can be used as coefficients to be used in a linear combination of the vectors corresponding to locations of the output pieces of information in the embedding and this linear combination can be added to the reference vector.

In still other embodiments, a coefficient (or in other words contribution) can be assigned to the relevance indicator of each output piece of information. The coefficient can notably be affected a decreasing value upon iteration of the method. For instance, during a session, a coefficient of a relevance indicator of a first piece of information output at the beginning of the session can be affected a value lower than a value of a coefficient of a relevance indicator of a second piece of information output later than the first piece of information.

The location of reference point can thus be seen, in a simplified way, as the understanding, by the application implementing the method of the present disclosure, of the concept (or semantic characteristics) of the target item the user is searching for. Varying the location of the refence point can permit to vary the selection of the closest pieces of information in order to converge to the target item.

In some embodiments, like in the exemplary embodiment of figure 5, two different submitting (or validating) buttons can be proposed to a user for submitting relevance indicators. For instance, those different buttons can correspond to a use of different ranking for an upcoming selecting of pieces of information to be output (for instance for the next selecting). In the illustrated example, when a first button 490 is pressed, or activated, a first ranking can be performed based on a distance between location of pieces of information and the reference point. In a variant, the first ranking can also be based on weighted values of those distances. In the illustrated example, when a second button 492 is activated, a second ranking, different from the first ranking, can be performed. The second ranking can use for instance a classifier (SVM) trained on relevance indicators and/or other feedback (like the additional pieces of information introduced below) obtained from the user for an upcoming selecting of pieces of information to be output (for instance for the next selecting).

In some embodiments, the outputting 133 of at least one piece of information can comprise providing 1332 a feedback to a user about the understanding, by the application implementing the method of the present disclosure, of the concept (or semantic characteristics) of the target item the user is searching. For instance, such a feedback can take the form of a heat map (or colour map) highlighting in at least one part of at least one output piece of information of visual type (like a still image or a video). Notably, in the embodiment illustrated by figure 5, the interface can permit to indicate a zone 426, 446, 456, 466 of an output image 420, 440, 450, 460 that is considered as (at least almost) relevant for the search. For instance, in figure 5, part of images related to a particular topic (like boat) can be rendered differently (for instance highlighted or rendered with an altered colour around the identified topic or with a limit (like an "overprinted" circle) added thereon.

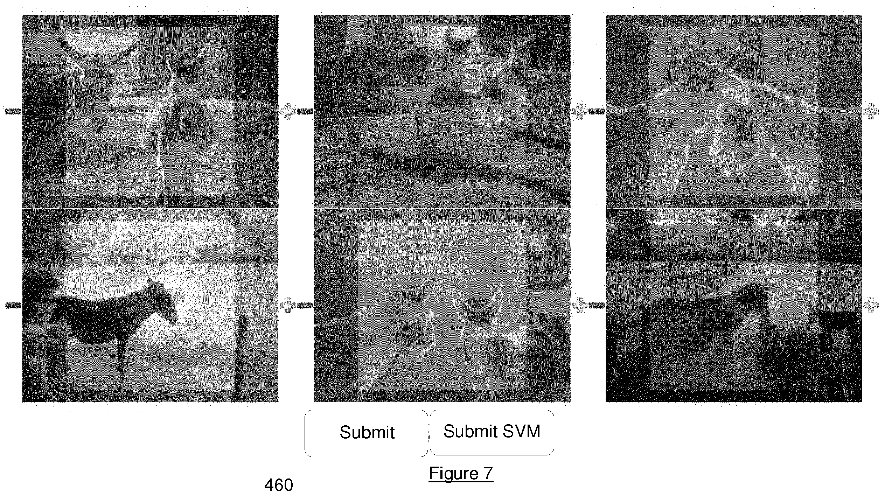

In the illustrated embodiment, only the relevant zone is indicated on a user interface. In other embodiments, as illustrated by figure 7, a colour map can be rendered that covers the entire image. The graduation of colours in the colour map can for instance being representative of a graduation of relevance, as understood by the application, inside the entire image.

In the described embodiment, combining the semantic property of the embedding with the localization ability of the CAM network can allow the visualization, on a piece of information of visual type associated with a first point of the embedding, of a semantic concept (like a semantic category of scenes or textual content) associated with a second point in the embedding. More precisely, as illustrated by figure 6A, the method can comprise inverting the visual embedding matrix $W_{img}$ used for constructing the embedding space and using this inverse matrix and a CAM network derived from the CNN used in the image embedding in order to obtain localization information, in an embedded piece of information of visual type, related to the second point. Indeed, multiplying the inverse matrix with the vector representing the position of a second point in the embedding space results in a vector similar to the output of the global average pooling layer of the CAM network and can be directly interpreted as a localization map, in an image of a piece of information of visual type, of the second point of the embedding.

Given an image and a vector $E$ defining a position of a given point of the embedded space, $U = W_{img}^{-1}E$ gives the visual representation of the given point, and $FU$, where $F$ is the stack of feature maps for the image of interest gives the colour map corresponding to the localization in the image of the concepts associated with the given point for the given image.

Such an embodiment can even permit to locate, in an image, points (or concepts or classes) of the embedding space that do not correspond to a concept (like annotated image, caption of an annotated image or word of a caption of an annotated image) used for the training of the visual embedding functions. For instance, if the embedding functions have been trained with images annotated, among others, with the term "dog" but none annotated with the term "cat", and if a user is searching for a cat image, it can be possible to retrieve, in an image located in the embedding space and containing both a cat and a dog, the area of the image that is related to a cat.

This property can be applied notably for identifying, in at least one image of a piece of information of visual type, for instance at least one image currently output on the user interface, at least one zone that corresponds to the reference point in the given image.

In the detailed embodiment, the method can comprise, notably when the search is successful, providing 140 an item (for instance the target item) output on the user interface, or a content linked to the output item. The linked content can be for instance an audio-visual content, like audio and/or video content, having a thumbnail image being the embedded item output on the touch screen.

Of course, the exemplary embodiments described herein are only presented as exemplary use cases and the principles of the present disclosure can also apply to many different use cases. Notably the embedding disclosed herein can be used for many processing other that a retrieval of an item.

The item can be of various type. A video can be represented in the multimodal space as one or several points. For instance, a video can be represented as a cloud of points, each point being a representation in the multimodal space of a frame of the video. in some embodiments, the cloud of points that represents the video can comprise a point for each frame of the video. In other embodiments, the cloud of points that represents the video can comprise points of only some frames of the video, like some key frames (for instance I-pictures of Groups Of Pictures). In still other embodiments, a video can be represented by a single point, for instance a point having a position vector being a linear combination of position vector of points representing frames of the video. Similarly, a textual sequence can be located as a cloud of points, each representing a word of the textual sequence, or a single point obtained from the words.

As can be appreciated by one skilled in the art, aspects of the present principles can be embodied as a communication device, system, method, or computer readable medium. Accordingly, aspects of the present disclosure can take the form of a hardware embodiment, a software embodiment (including firmware, resident software, micro-code, and so forth), or an embodiment combining software and hardware aspects that can all generally be referred to herein as a "circuit", "module" or "system". Furthermore, aspects of the present principles can take the form of a computer readable storage medium. Any combination of one or more computer readable storage medium may be utilized.

A computer readable storage medium can take the form of a computer readable program product embodied in one or more computer readable medium and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing.

It is to be appreciated that the following, while providing more specific examples of computer readable storage media to which the present principles can be applied, is merely an illustrative and not exhaustive listing as is readily appreciated by one of ordinary skill in the art: a portable computer diskette, a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

Thus, for example, it can be appreciated by those skilled in the art that the block diagrams presented herein represent conceptual views of illustrative system components and/or circuitry of some embodiments of the present principles. Similarly, it can be appreciated that any flow charts, flow diagrams, state transition diagrams, pseudo code, and the like represent various processes which may be substantially represented in computer readable storage media and so executed by a computer or processor, whether such computer or processor

**Claims**

1. A method comprising outputting at least one first piece of information associated to a first point of a space comprising points associated to items of a collection of items, said first piece of information being selected by taking into account a position of said first point in said space and a position of a reference point of said space.

2. The method of claim 1 wherein at least one of said first piece of information is an item of said collection of items and/or a textual element.

3. The method of claim 1 or 2 wherein said first piece of information is selected amongst pieces of information associated with a point of said space by taking into account a distance between positions of points associated with said pieces of information inside said space and said position of said reference point.

4. The method of claim 1 or 2 wherein said first piece of information is an item of said collection of items and said piece of information is selected among items associated with a point of said space, said selecting taking into account a distance between positions of points associated with said items inside said space and said position of said reference point.

5. The method of claim 1 or 2 wherein said first piece of information is external to said collection of items and said piece of information is selected among piece of information external to said collection of items associated with a point of said space. Said selecting can notably take into account a distance between positions of points associated with said pieces of information inside said space and said position of said reference point.

6. An electronic device comprising at least one processor configured for outputting at least one first piece of information associated to a first point of a space comprising points associated to items of a collection of items, said first piece of information being selected by taking into account a position of said first point in said space and a position of a reference point of said space.

7. The electronic device of claim 6 wherein said at least one processor is configured for updating a position of said reference point in said space.

8. The electronic device of claim 7 wherein said updating takes into account a first relevance indicator related to said output first piece of information.

9. The electronic device of claim 8 wherein said at least one processor is adapted for obtaining said first relevance indicator from said user interface.

10. The electronic device of any of claims 7 to 9 wherein said updating takes into account a position of a second point of said space.

11. The electronic device of claim 10 wherein said second point is a point of said space associated to a second piece of information obtained from a user interface.

12. The electronic device of any of claims 6 to 11 wherein said at least one processor is configured for outputting an information relative to said reference point together with said first and/or second piece of information.

13. The electronic device of claim 12 wherein said first and/or second piece of information is of image type and said information relative to said reference point is a colour map that representative of a localisation of said reference point inside said first and/or second piece of information.

14. A non-transitory computer readable program storage product comprising program code instructions for executing, when said program is executed by a computer, a method comprising outputting at least one first piece of information associated to a first point of a space comprising points associated to items of a collection of items, said first piece of information being selected by taking into account a position of said first point in said space and a position of a reference point of said space.

15. A computer-readable storage medium on which is saved a computer program comprising program code instructions for executing, when said program is executed by a computer, a method comprising outputting at least one first piece of information associated to a first point of a space comprising points associated to items of a collection of items, said first piece of information being selected by taking into account a position of said first point in said space and a position of a reference point of said space.

100

Obtaining
embedding

Constructing
embedding

Defining embedding functions

1122

112

Location items

1124

110

1126

Location words

Locating items in embedding

120

Retrieving
item

Determining reference point

131

130

Selecting pieces of information

132

Outputting selected pieces of information

133

1332

Providing feedback

Outputting Input Element

134

Obtaining relevance indicators

135

Obtaining additional piece(s) of information

136

Obtaining relevance indicators

137

140

Providing content

Figure 1

Figure 2A

Figure 3

LSTM encoding

word1 word2 word3 word4 word5

222

223

Dense Representation 1024

225

Learnt Dictionary D

Sparse Representation 23000

224

220

Figure 2B

CONV CONV CONV CONV CONV

GAP

w1 w2 wn

1024

W img

Class Activation Mapping (CAM)

W-1 img

Localization information

Figure 6

211    212    213    214    215    216    217    219

Class Activation Mapping

$W_1$ * ⬛ +$W_2$ * ⬛ + ...+$W_n$ * ⬛ = ⬛

Class Activation Map (Australian terrier)

Figure 2c

Databases

2D Embedding space

Moutains scenes

Sea scenes

Animals scenes

Images

Image wanted

Words

240

Figure 2d

Figure 4

Figure 5

EP 3 422 208 A1

Submit    Submit SVM

Figure 7

460

Europäisches
Patentamt

European
Patent Office

Office européen
des brevets

# EUROPEAN SEARCH REPORT

**Application Number**

EP 17 30 5840

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/243815 A1 (CHAN JAMES D [US] ET AL) 2 October 2008 (2008-10-02) * page 1 - page 11 * ----- | 1-15 | INV. G06F17/30 |

TECHNICAL FIELDS
SEARCHED (IPC)

G06F

The present search report has been drawn up for all claims

| Place of search | Date of completion of the search | Examiner |
|---|---|---|
| Munich | 27 October 2017 | Korkuzas, Valdas |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 17 30 5840

This annex lists the patent family members relating to the patent documents cited in the above-mentioned European search report.
The members are as contained in the European Patent Office EDP file on
The European Patent Office is in no way liable for these particulars which are merely given for the purpose of information.

27-10-2017

| Patent document cited in search report | Publication date | Patent family member(s) | Publication date |
|---|---|---|---|
| US 2008243815 A1 | 02-10-2008 | NONE | |

For more details about this annex : see Official Journal of the European Patent Office, No. 12/82

EPO FORM P0459

24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KIROS.** Unifying Visual-Semantic Embedding with Multimodal Neural Language Models. *Journal "ArXiv,* 2014

- **ZHOU.** Learning Deep Features for Discriminative Localization. *Conference on Computer Vision and Pattern Recognition,* 2016